(19) Europäisches Patentamt
European Patent Office
Office européen des brevets

(11) **EP 4 601 147 A1**

(12) **EUROPEAN PATENT APPLICATION**
published in accordance with Art. 153(4) EPC

(43) Date of publication:
**13.08.2025 Bulletin 2025/33**

(21) Application number: **23907594.8**

(22) Date of filing: **14.12.2023**

(51) International Patent Classification (IPC):
*H02J 7/00* (2006.01)   *G01R 19/165* (2006.01)

(52) Cooperative Patent Classification (CPC):
**G01R 19/165; H02J 7/00**

(86) International application number:
**PCT/KR2023/020676**

(87) International publication number:
**WO 2024/136308 (27.06.2024 Gazette 2024/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **23.12.2022 KR 20220183567**
**08.12.2023 KR 20230177695**

(71) Applicant: **LG Energy Solution, Ltd.**
**Seoul 07335 (KR)**

(72) Inventor: **MOON, Cheoul Woo**
**Daejeon 34122 (KR)**

(74) Representative: **Plasseraud IP**
**104 Rue de Richelieu**
**CS92104**
**75080 Paris Cedex 02 (FR)**

(54) **METHOD FOR BATTERY OVER-DISCHARGE PREVENTION AND BATTERY SYSTEM PROVIDING SAME**

(57) Disclosed are a method for over-discharge prevention and a battery system providing the same. An over-discharge prevention circuit controlling electrical connection between a battery and a converter converting a battery voltage, which is a voltage across the battery, to a drive voltage of a predetermined magnitude and supplying the converted voltage to a control unit, includes: (a) a low-voltage transistor connected between the battery and the converter to be turned on in a normal mode in which the battery voltage is more than a predetermined reference voltage, and turned off in an event mode in which the battery voltage is the reference voltage or less; (b) a first reference resistor connected between a positive electrode of the battery and a gate of the low-voltage transistor; and (c) a second reference resistor connected between the gate of the low-voltage transistor and ground, wherein each resistance value of the first reference resistor and the second reference resistor is determined based on a magnitude of the reference voltage.

FIG. 2

EP 4 601 147 A1

**Description**

**[Technical Field]**

CROSS-REFERENCE TO RELATED APPLICATION

This application claims priority to and the benefit of Korean Patent Application No. 10-2022-0183567 filed in the Korean Intellectual Property Office on December 23, 2022, and Korean Patent Application No. 10-2023-0177695 filed in the Korean Intellectual Property Office on December 08, 2023, the entire contents of which are incorporated herein by reference.

The present disclosure relates to a method for over-discharge prevention of battery and a battery system providing the same.

**[Background Art]**

A battery management system (BMS) may be a system safely managing and controlling a battery under various charge-discharge and environmental conditions, and ensuring a battery lifespan. For example, the battery management system (BMS) may entirely manage and control the battery including monitoring the voltage and temperature of the battery, estimating the state of charge (SOC) and state of health (SOH) of the battery, and controlling a charge or discharge profile of the battery.

The battery management system (BMS) may receive drive power from a low-voltage auxiliary battery (e.g., a lead acid battery) or a high-voltage main battery. The auxiliary battery may be a power source supplying power to various electronic components within the battery system, and supply power, for example, to the electronic component with a voltage of 12 V. The main battery may be a power source supplying power to an external device (e.g., a motor), may be various depending on a specification of the external device, and may mainly supply high-voltage power of 400 V or more to the external device. When using the main battery as a power source for the battery management system (BMS), a direct current to direct current (DCDC) converter may be further used to match the high-voltage power of the main battery to a drive voltage of the battery management system (BMS).

Meanwhile, over-discharge of the main battery may occur when the main battery is used as the power source for the battery management system (BMS) for a long time. The over-discharge of the main battery may cause a problem such as its ignition or shorter lifespan. To prevent this problem, a conventional battery management system (BMS) may be mounted with its own over-discharge prevention function in a software form.

However, a lot of battery management systems (BMS) may not be mounted with the over-discharge prevention function. In this case, when the low-voltage event occurs, turning off power of the converter to prevent the over-discharge of the battery may be considered as a temporary measure. However, the battery management system (BMS) may be required to wake up first in order to charge a discharged main battery with power from an external charger. In a situation where there is no auxiliary battery, the battery management system (BMS) may be unable to wake up.

Accordingly, there is a need for a solution to prevent the over-discharge of the main battery and wake up the battery management system (BMS) in a battery system using the main battery as the power source for the battery management system (BMS) even when the over-discharge prevention function is not mounted in the battery management system (BMS) and there is no auxiliary battery.

**[Disclosure]**

**[Technical Problem]**

The present disclosure attempts to provide a method for over-discharge prevention which may prevent over-discharge of a high-voltage battery in a battery system using the high-voltage battery as a power source for a battery management system (BMS), and a battery system providing the same.

The present disclosure also attempts to provide a method for over-discharge prevention in which the battery management system (BMS) wakes up and enters a charge mode as a user controls an external switch to be turned on even when a battery management system (BMS) is turned off due to occurrence of a low-voltage event, and a battery system providing the same.

**[Technical Solution]**

According to an embodiment, provided is an over-discharge prevention circuit controlling electrical connection between a battery and a converter converting a battery voltage, which is a voltage across the battery, to a drive voltage of a predetermined magnitude and supplying the converted voltage to a control unit, the circuit comprising a low-voltage prevention unit, the circuit including: (a) a low-voltage transistor connected between the battery and the converter to be turned on in a normal mode in which the battery voltage is more than a predetermined reference voltage, and turned off in an event mode in which the battery voltage is the reference voltage or less; (b) a first reference resistor connected between a positive electrode of the battery and a gate of the low-voltage transistor; and (c) a second reference resistor connected between the gate of the low-voltage transistor and ground, wherein each resistance value of the first reference resistor and the second reference resistor is determined based on a magnitude of the reference voltage.

The low-voltage transistor may be a P-channel metal-oxide-semiconductor field effect transistor (MOSFET), and may have a source connected to the positive electrode of the battery and one end of the first reference resistor, the gate connected to the other end of the first reference resistor and one end of the second reference resistor, and a drain connected to the converter.

The circuit may further include a power storage unit including: a first storage transistor turned on and operated with power from the control unit turned on by receiving the drive voltage; and a second storage transistor receiving power from the control unit and turned on to connect the second reference resistor and the ground to each other when the first storage transistor is turned on.

The first storage transistor may be the P-channel MOSFET, and may have a source connected to the control unit and one end of the first storage resistor, a gate connected to the other end of the first storage resistor and one end of the second storage resistor, and a drain connected to one end of a third storage resistor.

The second storage transistor may be a negative-positive-negative (NPN) type bipolar junction transistor (BJT), and may have a base connected to the other end of the third storage resistor, a collector connected to the other end of the second reference resistor, and an emitter connected to the ground.

The circuit may further include a first external switch connected between the collector of the second storage transistor and the ground, wherein in the normal mode, the low-voltage transistor is controlled to be turned on by being triggered by turn-on switching of the first external switch.

The circuit may further include a second external switch and an external resistor connected in series with each other between the gate of the low-voltage transistor and the ground, wherein in the event mode, the low-voltage transistor is controlled to be turned on by being triggered by turn-on switching of the second external switch.

A resistance value of the external resistor may be determined based on the magnitude of the reference voltage.

The circuit may further include a disturbance removal unit including: a disturbance transistor connected between the second storage resistor and the ground; a first disturbance resistor connected between a gate of the disturbance transistor and the ground; and a second disturbance resistor connected between the drain of the low-voltage transistor and the gate of the disturbance transistor.

The disturbance transistor may be an N-channel MOSFET, and may have a source connected to the ground, the gate connected to one end of the first disturbance resistor and the other end of the second disturbance resistor, and a drain connected to the other end of the second storage resistor.

## [Advantageous Effects]

The present disclosure may prevent the over-discharge of the battery by using the over-discharge prevention circuit connected between the battery and the converter.

In the present disclosure, the user may wake up the battery management system (BMS) by turning on the external switch connected to the over-discharge prevention circuit even when the battery management system (BMS) is turned off due to the occurrence of the low-voltage event.

## [Description of the Drawings]

FIG. 1 is a block diagram explaining a battery system according to an embodiment.
FIG. 2 is a circuit diagram showing in detail an over-discharge prevention circuit of FIG. 1.
FIG. 3 is a circuit diagram showing a state of the over-discharge prevention circuit before the battery and converter of FIG. 2 are electrically connected to each other.
FIG. 4 is a circuit diagram showing a state of the over-discharge prevention circuit after the battery and the converter are electrically connected to each other by turning on a first external switch SW_out1 of FIG. 2.
FIG. 5 is a circuit diagram showing a state after a control unit receiving a drive voltage from the converter of FIG. 2 controls a first storage transistor SW1 to be turned on.
FIG. 6 is a circuit diagram showing that the battery and the converter remain electrically connected to each other by a power maintenance circuit even when the first external switch SW_out1 is turned off in the state of FIG. 5.

FIG. 7 is a circuit diagram showing that the battery and the converter are electrically disconnected from each other when a low-voltage event occurs according to an embodiment.

FIG. 8 is a circuit diagram showing that the first storage transistor SW1 and a second storage transistor SW2 are not forcibly turned on due to an external factor when the low-voltage event occurs according to another embodiment.

FIG. 9 is a circuit diagram showing that the battery and the converter are not electrically connected to each other even when the first external switch SW_out1 is turned on when the low-voltage event occurs according to an embodiment.

FIG. 10 is a circuit diagram showing that the battery and the converter are electrically connected to each other by turning on the second external switch SW_out2 when the low-voltage event occurs according to another embodiment.

FIG. 11 is a circuit diagram showing a state where the control unit waking up by a measure of FIG. 10 turns on the first storage transistor SW1.

FIG. 12 is a circuit diagram of the over-discharge prevention circuit showing that the battery and the converter remain electrically connected to each other by the power maintenance circuit even when the second external switch SW_out2 is turned off in the state of FIG. 11.

## [Mode for Invention]

Hereinafter, embodiments disclosed in the specification are described in detail with reference to the accompanying drawings, the same or similar components are denoted by the same or similar reference numerals, and an overlapping description thereof is omitted. Terms "module" and/or "unit" for components described in the following description are used only to make the specification easily understood. Therefore, these terms do not have meanings or roles distinguished from each other in themselves. Further, in describing the embodiments disclosed in the specification, omitted is a detailed description of a case where it is decided that the detailed description of the known art related to the present disclosure may obscure the gist. Furthermore, it is to be understood that the accompanying drawings are provided only to allow the embodiments of the present disclosure to be easily understood, and the spirit of the present disclosure is not limited by the accompanying drawings and includes all the modifications, equivalents and substitutions included in the spirit and scope of the present disclosure.

Terms including ordinal numbers such as "first", "second", and the like, may be used to describe various components. However, these components are not limited by these terms. These terms are used only to distinguish one component from another component.

It is to be understood that when one component is referred to as being "connected to" or "coupled to" another component, one component may be directly connected or coupled to another component, or may be connected or coupled to another component while having a third component interposed therebetween. On the other hand, it is to be understood that when referred to as being "directly connected to" or "directly coupled to" another element, one element may be connected or coupled to another element without a third element interposed therebetween.

It is to be understood that terms "include", "have" and the like used in the present application specify the presence of features, numerals, steps, operations, components, parts or combinations thereof, mentioned in the specification, and do not preclude the presence or possible addition of one or more other features, numerals, steps, operations, components, parts or combinations thereof.

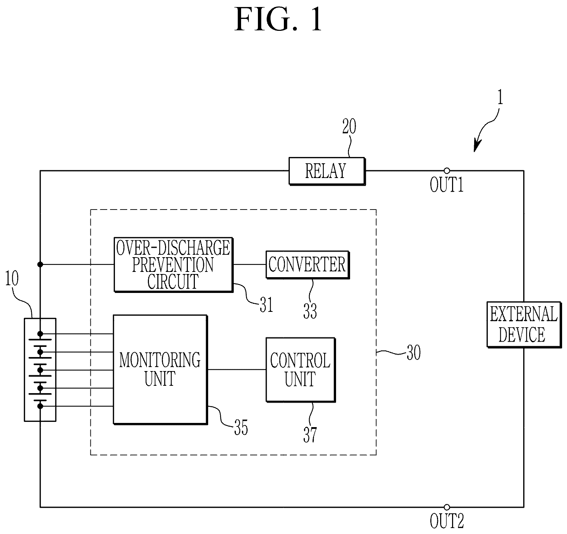

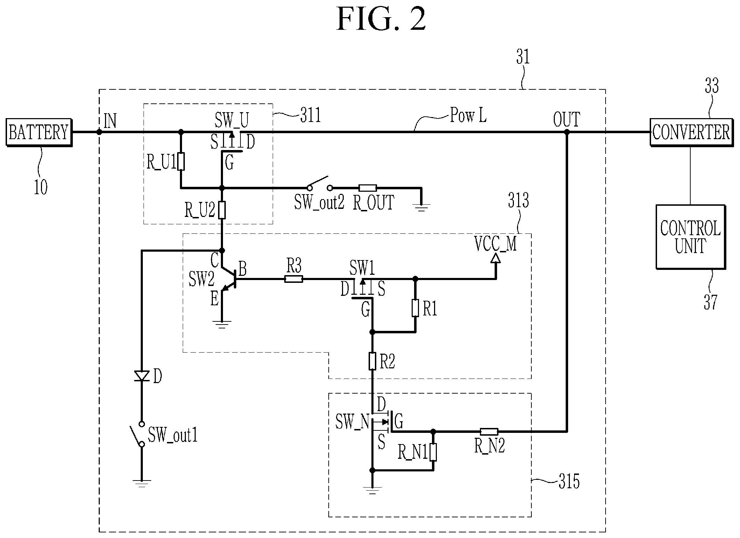

FIG. 1 is a block diagram explaining a battery system according to an embodiment; and FIG. 2 is a circuit diagram showing in detail an over-discharge prevention circuit 31 of FIG. 1.

Referring to FIG. 1, a battery system 1 may include a battery 10, a relay 20, and a battery management system (BMS) 30.

The battery 10 may include a plurality of battery cells Cell_1 to Cell_4 electrically connected in series and parallel with each other. In some embodiments, the battery cell may be a rechargeable secondary battery. A predetermined number of battery cells may be connected in series with each other to form a battery module, a predetermined number of battery modules may be connected in series with each other to form a battery pack, and a predetermined number of battery packs may be connected in parallel with each other to form a battery bank, thereby supplying desired power. FIG. 1 shows the battery 10 in which the plurality of battery cells Cell_1 to Cell_4 are connected in series with each other, the battery 10 is not limited thereto, and may be configured in a battery module unit, a battery pack unit, or a battery bank unit.

Each of the plurality of battery cells Cell_1 to Cell_4 may be electrically connected to the BMS 30 through wiring. The BMS 30 may collect and analyze various information on the battery cells that includes information on the plurality of battery cells Cell_1 to Cell_4 to thus control the charge, discharge, protection operation, or the like of the battery cell and control an operation of the relay 20.

The relay 20 may control electrical connection between the battery system 1 and an external device. When the relay 20 is turned on, the battery system 1 and the external device may be electrically connected to each other to perform the charge or the discharge of the battery. When the relay 20 is turned off, the battery system 1 and the external device may be electrically disconnected from each other. Here, the external device may be a charger in a charge cycle in which the battery 10 receives power to thus be charged, and may be a load in a discharge cycle in which the battery 10 discharges power to the external device.

The BMS 30 may include the over-discharge prevention circuit 31, a converter 33, a monitoring unit 35, and a control unit 37.

FIG. 1 shows that the over-discharge prevention circuit 31 and the converter 33 are included in the BMS 30, are not limited thereto, and at least one of the over-discharge prevention circuit 31 and the converter 33 may be a separate device disposed outside the BMS 30.

The over-discharge prevention circuit 31 may prevent the battery 10 from being over-discharged by blocking the electrical connection between the battery 10 and the converter 33 when a low-voltage event occurs in which a voltage of the battery 10 is decreased to a preset reference voltage or less. Referring to FIG. 2, an input terminal IN of the over-discharge prevention circuit 31 may be connected to a positive electrode of the battery 10, and an output terminal OUT may be connected to the converter 33.

According to an embodiment, the over-discharge prevention circuit 31 may electrically connect the battery 10 and the converter 33 to each other as a user controls a first external switch to be turned on. The control unit 37 may then be turned on by receiving a drive voltage through the converter 33. According to another embodiment, the over-discharge prevention circuit 31 may electrically connect the battery 10 and the converter 33 to each other when the user turns on a second external switch in a state where the BMS 30 is turned off due to the occurrence of the low-voltage event. The control unit 37 may then wake up by receiving the drive voltage through the converter 33, and charge the discharged battery 10 with power of the external device (e.g., the charger) to thus control the battery system to be operated in a normal mode.

Referring to FIG. 2, the over-discharge prevention circuit 31 may include a low-voltage prevention unit 311, a power storage unit 313, a disturbance removal unit 315, a first external switch SW_out1, and a second external switch SW_out2.

The low-voltage prevention unit 311 may connect the battery 10 and the converter 33 to each other when the voltage of the battery 10 is more than the preset reference voltage. In addition, the low-voltage prevention unit 311 may disconnect the battery 10 and the converter 33 from each other when the voltage of the battery 10 is the preset reference voltage or less. The voltage of the battery 10 may thus be prevented from being decreased to a limit voltage or less due to over-discharge of the battery 10.

The low-voltage prevention unit 311 may include a low-voltage transistor SW_U, a first reference resistor R_U1, and a second reference resistor R_U2.

The low-voltage transistor SW_U may be connected in series between the battery 10 and the converter 33, and control the electrical connection between the battery 10 and the converter 33. The converter 33 and the battery 10 may be electrically connected to each other when the low-voltage transistor SW_U is turned on. The control unit 37 may then be turned on by receiving power from the converter 33. The converter 33 and the battery 10 may be electrically disconnected from each other when the low-voltage transistor SW_U is turned off. The control unit 37 may then be turned off by having power supply blocked.

The low-voltage transistor SW_U may be an electronic relay including a semiconductor switching element. The semiconductor switching element may use a metal-oxide-semiconductor field effect transistor (MOSFET). However, the low-voltage transistor SW_U is not limited thereto, and may be any of various types of electronic relays.

Referring to FIG. 2, for example, the low-voltage transistor SW_U may be implemented as a P-channel MOSFET. The low-voltage transistor SW_U may be turned on when a negative voltage is supplied to a gate G. That is, a current may flow from a source S to a drain D when a gate voltage $V\_G$ is less than a source voltage $V\_S$.

In some embodiments, the low-voltage transistor SW_U may be switched by the gate voltage $V\_G$ corresponding to a resistance distribution ratio of the first reference resistor R_U1 to the second reference resistor R_U2. For example, the low-voltage transistor SW_U may be turned on when the voltage of the battery 10 is more than the preset reference voltage.

Referring to FIGS. 1 and 2, the first reference resistor R_U1 may have one end connected to the input terminal IN and the other end connected to the gate G of the low-voltage transistor SW_U. The second reference resistor R_U2 may have one end connected to the gate G of the low-voltage transistor SW_U, and the other end connected to ground GND through a diode D and the first external switch SW_out1.

In some embodiments, each resistance value of the first reference resistor R_U1 and the second reference resistor R_U2 may be determined based on the reference voltage that is a basis for the low-voltage event. The low-voltage event may be an event in which the voltage of the battery 10 is decreased to the reference voltage or less. A safety problem such as a fire in the battery 10 may occur when an over-discharge event occurs in which the voltage of the battery 10 is excessively decreased to the reference voltage or less.

The power storage unit 313 may maintain the electrical connection between the battery 10 and the converter 33 under the control of the control unit 37. In detail, when the first external switch SW_out1 is turned on, the battery 10 and the converter 33 are electrically connected to each other the electrical connection between the battery 10 and the converter 33 may be maintained by the power storage unit 313 even if the first external switch SW_out1 is then turned off.

The power storage unit 313 may include a first storage transistor SW1, a second storage transistor SW2, a first storage resistor R1, a second storage resistor R2, and a third storage resistor R3.

The first storage transistor SW1 may be connected between a base B of the second storage transistor SW2 and an auxiliary power source VCC_M, and control the electrical connection between the base B of the second storage transistor SW2 and the auxiliary power source VCC_M. In some embodiments, the auxiliary power source VCC_M may be the control unit 37.

Referring to FIG. 2, the control unit 37 may be turned on by receiving power from the converter 33 when the low-voltage transistor SW_U is turned on and the converter 33 and the battery 10 are electrically connected to each other. The control unit 37 may then supply a high-level voltage to the base B of the second storage transistor SW2 through the first storage transistor SW1. The second storage transistor SW2 may then be turned on, and the second reference resistor R_U2 and the ground GND may be electrically connected to each other by the second storage transistor SW2. That is, the power maintenance unit 313 may be turned on by the control unit 37.

The first storage transistor SW1 may be the electronic relay including the semiconductor switching element. The semiconductor switching element may use the metal-oxide-semiconductor field effect transistor (MOSFET). However, the first storage transistor SW1 is not limited thereto, and may be any of various types of electronic relays.

Referring to FIG. 2, for example, the first storage transistor SW1 may be implemented as the P-channel MOSFET. In some embodiments, the first storage transistor SW1 may be switched by the gate voltage V_G corresponding to a resistance distribution ratio of the first storage resistor R1 to the second storage resistor R2. For example, the control unit 37 functioning as the auxiliary power source VCC_M may supply a voltage of zero V or more to the source S of the first storage transistor SW1. Accordingly, the first storage transistor SW1 may be turned on when the gate G of the first storage transistor SW1 is connected to the ground GND through the second storage resistor R2 and a disturbance transistor SW_N.

The second storage transistor SW2 may be connected in series between the second reference resistor R_U2 and the ground GND, control the electrical connection between the second reference resistor R_U2 and the ground GND. The second reference resistor R_U2 and the ground GND may be connected to each other when the second storage transistor SW2 is turned on. The second reference resistor R_U2 may then remain connected to the ground even when the first external switch SW_out1 is turned off, and the ground-level gate voltage V_G may be continuously supplied to the gate G of the low-voltage transistor SW_U.

The second storage transistor SW2 may be the electronic relay including the semiconductor switching element. The semiconductor switching element may use a bipolar junction transistor (BJT). However, the second storage transistor SW2 is not limited thereto, and may be any of various types of electronic relays.

Referring to FIG. 2, for example, the second storage transistor SW2 may be implemented as a negative-positive-negative (NPN) type BJT. The second storage transistor SW2 may be turned on by applying a forward bias voltage between the base B and emitter E of the second storage transistor SW2 and applying a reverse bias voltage between the base B and collector C of the second storage transistor SW2 when the first storage transistor SW1 is turned on and a positive voltage is supplied by the auxiliary power source VCC_M. That is, the second storage transistor SW2 may be turned on by the high-level voltage applied to the base B. In addition, the second storage transistor SW2 may be turned off by a low-level voltage applied to the base B.

Referring to FIGS. 1 and 2, the first storage resistor R1 may have one end connected to the auxiliary power source VCC_M and the source S of the first storage transistor SW1, and the other end connected to the gate G of the first storage transistor SW1. The second storage resistor R2 may have one end connected to the gate G of the first storage transistor SW1, and the other end connected to the ground GND through the disturbance transistor SW_N.

Each resistance value of the first storage resistor R1 and the second storage resistor R2 may be determined based on a voltage value of power supplied by the auxiliary power source VCC_M, and a voltage value between the gate G and the source S for switching the first storage transistor SW1.

The third storage resistor R3 may be connected between the base B of the second storage transistor SW2 and the drain D of the first storage transistor SW1. For example, the resistance value of the third storage resistor R3 may be determined based on a drive voltage value supplied to the base B required to turn on the second storage transistor SW2.

The disturbance removal unit 315 may block the battery 10 and the converter 33 from being connected to each other due to a disturbance in a state where the low-voltage event occurs. For example, the battery 10 and the converter 33 may be required to be electrically disconnected from each other when the low-voltage event occurs. However, the power storage unit 313 may be driven (i.e., turned on) when the voltage supplied by the auxiliary power source VCC_M is changed to a high level due to the disturbance. A problem may then occur in which the battery 10 and the converter 33 are connected to each other by the power storage unit 313 even in a state where the low-voltage event occurs. Here, the disturbances may include electro static discharge or the like.

The disturbance removal unit 315 may include the disturbance transistor SW_N, a first disturbance resistor R_N1, and a second disturbance resistor R_N2.

The disturbance transistor SW_N may be connected in series between the second storage resistor R2 and the ground GND, and control the electrical connection between the second storage resistor R2 and the ground GND. The second storage resistor R2 and the ground GND may be disconnected from each other when the disturbance transistor SW_N is turned off. The first storage transistor SW1 and the second storage transistor SW2 may be unable to be turned on even when the voltage of the auxiliary power source VCC_M is changed to the high level due to the disturbance. That is, it is possible to solve the problem in which the battery 10 and the converter 33 are connected to each other by the disturbance in the state where the low-voltage event occurs.

The disturbance transistor SW_N may be the electronic relay including the semiconductor switching element. The semiconductor switching element may use the metal-oxide-semiconductor field effect transistor (MOSFET). However, the disturbance transistor SW_N is not limited thereto, and may be any of various types of electronic relays.

For example, the disturbance transistor SW_N may be implemented as an N-channel MOSFET. The disturbance transistor SW_N may be turned on when the positive gate voltage V_G is applied to the gate G. That is, the current may flow between the drain D and the source S when the gate voltage V_G is more than the source voltage V_S.

Referring to FIG. 2, the drain D of the disturbance transistor SW_N may be connected to the gate G of the first storage transistor SW1 through the second storage resistor R2, the gate G of the disturbance transistor SW_N may be connected to the output terminal OUT through the second disturbance resistor R_N2, and the source S of the low-voltage transistor SW_U may be connected to the ground GND.

The first disturbance resistor R_N1 may be connected between the gate G and source S of the disturbance transistor SW_N. For example, the resistance value of the first disturbance resistor R_N1 may be determined corresponding to a voltage difference V_GS between the gate G and the source S required for the disturbance transistor SW_N to be turned on.

The second disturbance resistor R_N2 may be connected between the output terminal OUT and the gate G of the disturbance transistor SW_N. For example, the resistance value of the second disturbance resistor R_N2 may be determined corresponding to a difference value between the gate voltage V_G value, which is required to be supplied to the gate G of the disturbance transistor SW_N in order to turn on the disturbance transistor SW_N, and the voltage value of the output terminal OUT.

The first external switch SW_out1 may be a switch for turning on the control unit 37 in the normal mode in which the voltage of the battery 10 is more than the reference voltage. Referring to FIG. 2, the battery 10 and the converter 33 may be connected to each other by the low-voltage prevention unit 311 when the first external switch SW_out1 is turned on, and the control unit 37 may be turned on by the drive voltage supplied by the converter 33. The battery 10 and the converter 33 may thus remain connected to each other by the power storage unit 313 even when the first external switch SW_out1 is turned off.

For example, the first external switch SW_out1 may be a push button type switch switched by the user. The electrical connection between the battery 10 and the converter 33 may be maintained by the power storage unit 313 even if the user releases the first external switch SW_out1 and the first external switch SW_out1 is turned off when the first external switch SW_out1 is turned on by the user and the battery 10 and the converter 33 are electrically connected to each other.

The second external switch SW_out2 may be a switch for turning on the control unit 37 in an event mode in which the low-voltage event occurs where the voltage of the battery 10 is the reference voltage or less. Referring to FIG. 2, the first reference resistor R_U1 and the external resistor (R_OUT) may be connected in series with each other when the second external switch SW_out2 is turned on. The gate voltage V_G corresponding to a resistance distribution ratio of the first reference resistor R_U1 to an external resistor R_OUT may then be applied to the gate G of the low-voltage transistor SW_U, and the low-voltage transistor SW_U may be turned on.

For example, the second external switch SW_out2 may be the push button type switch switched by the user. The electrical connection between the battery 10 and the converter 33 may be maintained by the power storage unit 313 even if the user releases the second external switch SW_out2 and the second external switch SW_out2 is turned off when the second external switch SW_out2 is turned on by the user and the battery 10 and the converter 33 are electrically connected to each other.

The converter 33 may convert high-voltage power of the battery 10 to low-voltage power corresponding to the drive voltage of the control unit 37. The control unit 37 may be operated by receiving the drive voltage of a certain magnitude that is provided by the converter 33. For example, the converter 33 may be a direct current to direct current (DCDC) converter converting a high-voltage direct current (DC) of the battery 10 to a predetermined direct current voltage (DC).

The monitoring unit 35 may be electrically connected to the positive and negative electrodes of each of the plurality of battery cells Cell_1 to Cell_4, measure a cell voltage of each of the plurality of battery cells Cell_1 to Cell_4, and calculate a cell current based on the measured cell voltage. The monitoring unit 35 may transmit the cell voltage and cell current of each of the plurality of battery cells Cell_1 to Cell_4 to the control unit 37.

The control unit 37 may entirely control the BMS 30 and the battery system 1. In some embodiments, the control unit 37 may supply power to the power storage unit 313 to thus control the power storage unit 313 to maintain the electrical connection between the battery 10 and the converter 33 when turned on by receiving the drive voltage through the converter 33. For example, the control unit 37 may be a micro controller unit (MCU).

Hereinafter, the description describes in detail a method for waking up the control unit 37 to prevent the over-discharge of the battery 10 due to the occurrence of the low-voltage event and to charge the battery 10 in a low-voltage state.

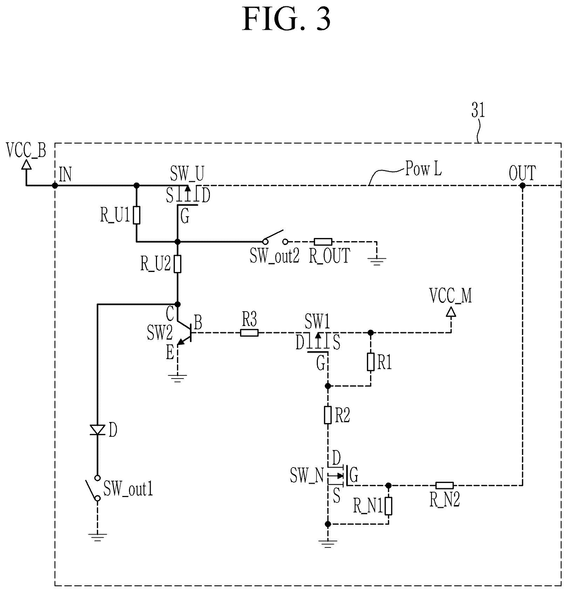

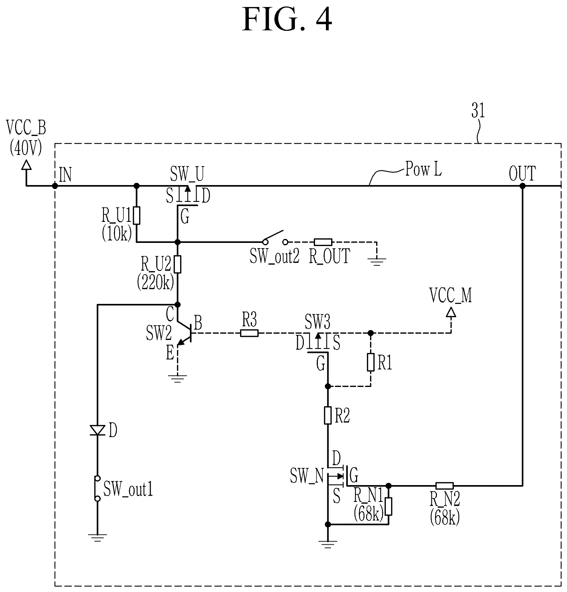

FIG. 3 is a circuit diagram showing a state of the over-discharge prevention circuit 31 before the battery 10 and converter 33 of FIG. 2 are electrically connected to each other; and FIG. 4 is a circuit diagram showing a state of the over-discharge prevention circuit 31 after the battery 10 and the converter 33 are electrically connected to each other by turning on the first external switch SW_out1 of FIG. 2.

Referring to FIGS. 1 to 4, the battery 10 may be used as a power source VCC_B supplying the drive voltage to the control unit 37. The converter 33 may be connected to a front end of the control unit 37 to decrease a magnitude of the voltage from the high-voltage power of the battery 10 to the drive voltage of the control unit 37. Meanwhile, a problem may occur in which the battery 10 is over-discharged when the battery 10 is used as the power source for the control unit 37 for a long time.

The battery system 1 may include the over-discharge prevention circuit 31 between the battery 10 and the converter 33 to wake up the control unit 37, thus preventing the over-discharge of the battery 10 and charging the battery 10 in the low voltage state.

Referring to FIG. 3, the second reference resistor R_U2 may be in a floating state where the second reference resistor R_U2 is not connected to the ground in an off state of the first external switch SW_out1 even when receiving power from the battery 10. Accordingly, the low-voltage transistor SW_U may not be turned on. In each circuit diagram of the over-discharge prevention circuit 31 that is shown in FIGS. 3 to 12 below, a solid line may indicate a power line to which power is supplied, and a dotted line may indicate a power line to which power is not supplied.

Referring to FIG. 4, for example, assume that the reference voltage which is a reference for the low-voltage event, is 35 V, and the voltage of the battery 10 is 40 V. The second reference resistor R_U2 may be connected to the ground when the first external switch SW_out1 is turned on by the user's physical action. The first reference resistor R_U1 and the second reference resistor R_U2 may then be connected in series with each other between the power source VCC_B of the battery 10 and the ground, and the voltage of the battery 10 that corresponds to a magnitude of the second reference resistor R_U2 may be supplied to the gate voltage V_G of the low-voltage transistor SW_U.

$$V\_S = V\_B \qquad \text{- Equation 1}$$

Equation 1 above is an equation for the source voltage V_S of the low-voltage transistor SW_U. Referring to FIG. 4, a magnitude of the source voltage V_S of the low-voltage transistor SW_U may correspond to a magnitude of a battery voltage V_B which is the voltage of the battery 10. In FIG. 4, the source voltage V_S of the low-voltage transistor SW_U is 40 V.

$$V\_G = \frac{R\_U2}{R\_U1 + R\_U2} \times V\_B \qquad \text{- Equation 2}$$

Equation 2 above is an equation for the gate voltage V_G of the low-voltage transistor SW_U. In FIG. 4, assume that the resistance values of the first reference resistor R_U1 and the second reference resistor R_U2 may respectively be 10 kΩ and 220 kΩ. According to Equation 2 above, a magnitude of the voltage supplied to the gate voltage V_G of the low-voltage transistor SW_U is about 38.26 V.

$$V\_SG = V\_S - V\_G > V\_th \qquad \text{- Equation 3}$$

Equation 3 above is an equation for a threshold voltage V_th of the low-voltage transistor SW_U which is the P-channel MOSFET. That is, the low-voltage transistor SW_U may be turned on when a voltage value V_SG acquired by subtracting the gate voltage V_G from the source voltage V_S is more than the threshold voltage V_th. In FIG. 4, the gate voltage V_G is about 38.26 V. Accordingly, assume that the voltage value V_SG of 1.74 V acquired by subtracting the gate voltage V_G from the source voltage V_S is more than the threshold voltage V_th.

In summary, in a case where the respective magnitudes of the first reference resistor R_U1 and the second reference resistor R_U2 are 10 kΩ and 220 kΩ, and a magnitude of the battery voltage V_B is 40 V, the battery 10 and the converter 33 may be connected to each other to supply the drive voltage to the control unit 37 when the user pushes the first external switch SW_out1 to control the same to be turned on. That is, the control unit 37 may be turned on.

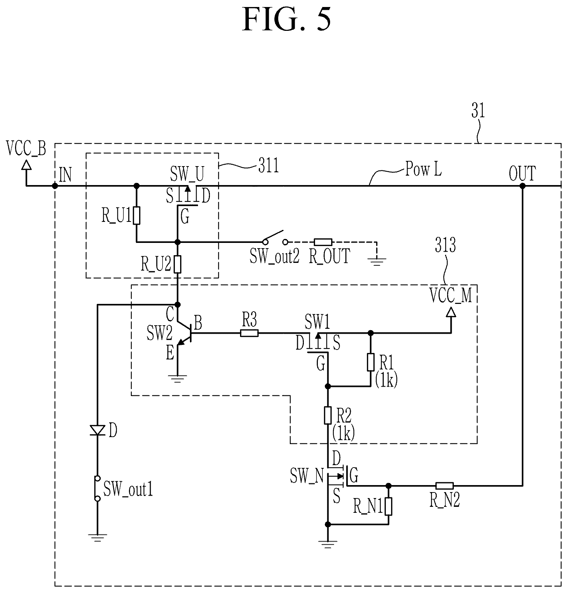

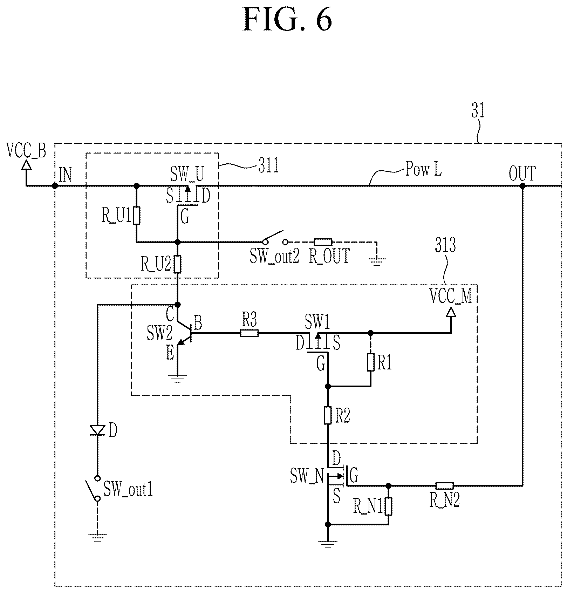

FIG. 5 is a circuit diagram showing a state after the control unit 37 receiving the drive voltage from the converter 33 of FIG. 2 controls a first storage transistor SW1 to be turned on; and FIG. 6 is a circuit diagram showing that the battery 10 and the converter 33 remain electrically connected to each other by the power maintenance circuit 313 even when the first external switch SW_out1 is turned off in the state of FIG. 5.

Referring to FIGS. 2 and 5, the low-voltage transistor SW_U may be turned on when the battery voltage V_B is more than the reference voltage. The battery 10 and the converter 33 may then be electrically connected to each other through a power line Pow_L connecting the input terminal IN and output terminal OUT of the over-discharge prevention circuit 31 with each other. Here, the control unit 37 may also be turned on.

Referring to FIG. 5, the gate G of the disturbance transistor SW_N may be connected to the output terminal OUT, and the disturbance transistor SW_N receiving the high-level gate voltage may be turned on. As the disturbance transistor SW_N is turned on, a ground-level voltage may be applied to the gate G of the first storage transistor SW1. In addition, the high-level source voltage (for example, about 5 V) may be applied to the source S of the first storage transistor SW1 from the auxiliary power source VCC_M. Here, the auxiliary power source VCC_M may be the control unit 37. The first storage transistor SW1 may then be turned on, and connect the base B of the second storage transistor SW2 and the auxiliary power source VCC_M to each other. In addition, the second storage transistor SW2 where the high-level voltage is applied to the base B by the auxiliary power source VCC_M may be turned on. The second reference resistor R_U2 and the ground GND may be connected to each other when the second storage transistor SW2 is turned on. That is, referring to FIGS. 2 and 5, the power storage unit 313 may also be turned on when the low-voltage transistor SW_U is turned on.

Referring to FIG. 6, the second reference resistor R_U2 may remain connected to the ground through the second storage transistor SW2 by the power storage unit 313 even when the first external switch SW_out1 is turned off by the user's physical action. The low-voltage transistor SW_U may then maintain its on state. That is, the control unit 37 may continuously receive the drive voltage even when the first external switch SW_out1 is turned off by the user's physical action.

In some embodiments, it may be difficult for the user to continuously press the first external switch SW_out1 to maintain the on state of the BMS 30 even when the BMS 30 is turned on by the user's intension. The control unit 37 may control the power storage unit 313 to maintain its on state even when the user controls the first external switch SW_out1 to be turned off.

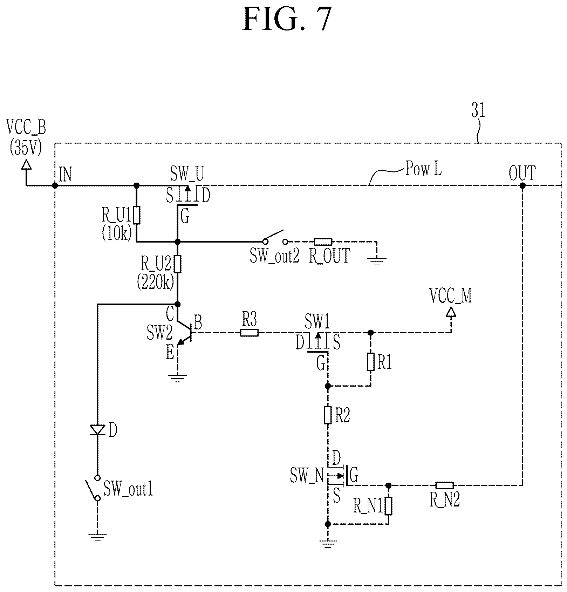

FIG. 7 is a circuit diagram showing that the battery 10 and the converter 33 are electrically disconnected from each other when the low-voltage event occurs according to an embodiment.

The battery voltage V_B or VCC_B may be decreased as the battery 10 is continuously discharged. It may be required to stop discharging the battery 10 and recharge the battery 10 when the battery voltage V_B or VCC_B is decreased to the reference voltage. Here, the BMS 30 may entirely control the charge and discharge of the battery 10.

For example, referring to FIG. 7, the reference voltage, which is the reference for the low-voltage event, is 36 V, and a magnitude of the battery voltage VCC_B is 35 V which is less than the reference voltage. Therefore, the low-voltage transistor SW_U may be turned off when the low-voltage event occurs. In detail, referring to Equations 1 to 3, the source voltage V_S of the low-voltage transistor SW_U and the gate voltage V_G of the low-voltage transistor SW_U may respectively be 35 V and about 33.478 V. The voltage value V_SG of about 1.522 V, which is acquired by subtracting the gate voltage V_G from the source voltage V_S, may be less than the threshold voltage V_th (for example, 1.565 V), and the low-voltage transistor SW_U may thus be turned off.

Referring to FIG. 7, the electrical connection between the battery 10 and the converter 33 may be disconnected from each other when the low-voltage transistor SW_U is turned off. The disturbance transistor SW_N may then be turned off because power is not supplied to the gate G of the disturbance transistor SW_N connected to the output terminal OUT. In addition, the control unit 37 in the off state may be unable to perform the function of the power source VCC_M supplying power to the source S of the first storage transistor SW1. As a result, the first storage transistor SW1 may be turned off.

In summary, the control unit 37 may be turned off to prevent the over-discharge of the battery 10 in the event mode in which the low-voltage event occurs.

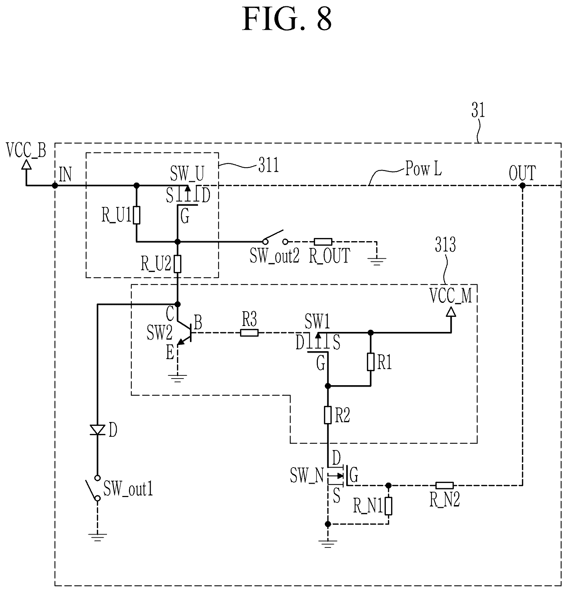

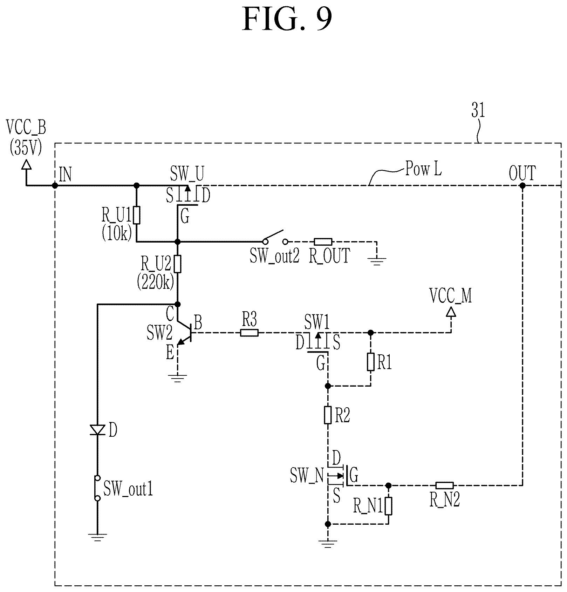

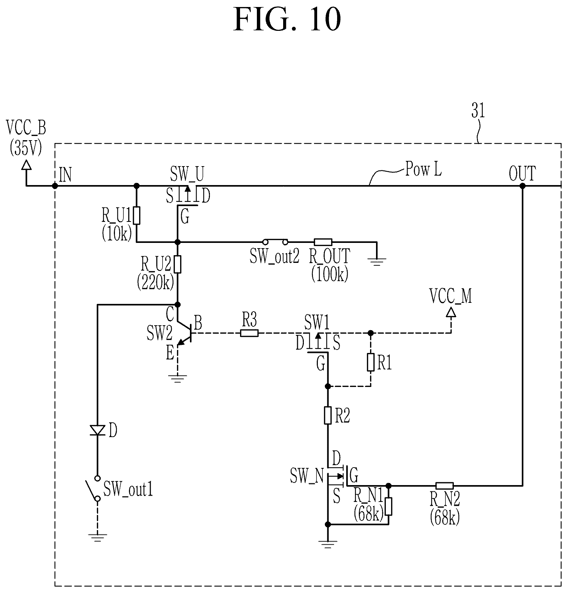

FIG. 8 is a circuit diagram showing that the first storage transistor SW1 and a second storage transistor SW2 are not forcibly turned on due to an external factor when the low-voltage event occurs according to another embodiment; FIG. 9 is a circuit diagram showing that the battery 10 and the converter 33 are not electrically connected to each other even when the first external switch SW_out1 is turned on when the low-voltage event occurs according to an embodiment; and FIG. 10 is a circuit diagram showing that the battery 10 and the converter 33 are electrically connected to each other by turning on the second external switch SW_out2 when the low-voltage event occurs according to another embodiment.

For example, the battery 10 and the converter 33 may be required to be electrically disconnected from each other when the low-voltage event occurs. However, the power storage unit 313 may be driven (i.e., turned on) when the voltage supplied by the auxiliary power source VCC_M is changed to the high level due to the disturbance. A problem may then occur in which the battery 10 and the converter 33 are connected to each other by the power storage unit 313 even in the state where the low-voltage event occurs. Here, the disturbances may include the electro static discharge or the like.

Referring to FIGS. 7 and 8, the disturbance transistor SW_N may be turned off because power is not supplied to the gate G of the disturbance transistor SW_N connected to the output terminal OUT in the event mode in which the low-voltage event occurs. The second storage resistor R2 and the ground GND may be electrically disconnected from each other when the disturbance transistor SW_N is turned off. The first storage transistor SW1 and the second storage transistor SW2 may be unable to be turned on even when the voltage of the auxiliary power source VCC_M is changed to the high level due to the disturbance. As a result, the second reference resistor R_U2 may be in the floating state where the second reference resistor R_U2 is not connected to the ground, and the low-voltage transistor SW_U may be unable to be turned on. It is then possible to solve the problem in which the battery 10 and the converter 33 are connected to each other by the disturbance in the state where the low-voltage event occurs.

Referring to FIGS. 7 and 9, the first external switch SW_out1 may be turned on by the user in the event mode in which the low-voltage event occurs, and the battery 10 and the converter 33 may not be connected to each other even though the second reference resistor R_U2 is connected to the ground through the first external switch SW_out1.

In detail, the reason is that according to Equation 2 above, the voltage of the battery 10 that corresponds to the magnitude of the second reference resistor R_U2 may be supplied to the gate voltage V_G of the low-voltage transistor SW_U when the first external switch SW_out1 is turned on and the second reference resistor R_U2 is connected to the ground through the first external switch SW_out1.

For example, assume that the resistance values of the first reference resistor R_U1 and the second reference resistor R_U2 may respectively be 10 kΩ and 220 kΩ. As described with reference to FIG. 7, the voltage value V_SG acquired by subtracting the gate voltage V_G from the source voltage V_S of the low-voltage transistor SW_U may still be about 1.522 V, which is less than the threshold voltage V_th (for example, 1.565 V). That is, the low-voltage transistor SW_U may be unable to be turned on.

Referring to FIGS. 7 and 10, the battery 10 and the converter 33 may be electrically connected to each other when the second external switch SW_out2 is turned on by the user and the second reference resistor R_U2 is connected to the ground through the second external switch SW_out2 in the event mode in which the low-voltage event occurs.

$$V\_G = \frac{R\_OUT}{R\_U1 + R\_OUT} \times V\_B \qquad \text{- Equation 4}$$

In detail, the first reference resistor R_U1 and the external resistor R_OUT may be connected in series with each other when the second external switch SW_out2 is turned on. The reason is that according to Equation 4 above, the voltage of the battery 10 corresponding to a magnitude of the external resistor R_OUT is then supplied to the gate G of the low-voltage transistor SW_U.

For example, referring to FIG. 7, assume that the respective resistance values of the first reference resistor R_U1 and the external resistor R_OUT are 10 kΩ and 100 kΩ. The respective magnitudes of the source voltage V_S of the low-voltage transistor SW_U and the gate voltage V_G of the low-voltage transistor SW_U may be 35 V and about 31.82 V. That is, the voltage value V_SG acquired by subtracting the gate voltage V_G from the source voltage V_S of the low-voltage transistor SW_U may be about 3.182 V, which is more than the threshold voltage V_th (for example, 1.565 V). The low-voltage transistor SW_U may then be turned on.

In summary, in the battery system including the over-discharge prevention circuit 31 according to an embodiment, the first storage transistor SW1 and the second storage transistor SW2 may not be forcibly turned on by the disturbance in the event mode in which the low-voltage event occurs. In addition, the first external switch SW_out1 may be a switch for turning on the control unit 37 in the normal mode in which the battery voltage VCC_B is more than the reference voltage, and may be unable to turn on the control unit 37 in the event mode in which the low-voltage event occurs. The second external switch SW_out2 may be a switch for turning on the control unit 37 in the event mode in which the low-voltage event occurs where the battery voltage VCC_B is the reference voltage or less.

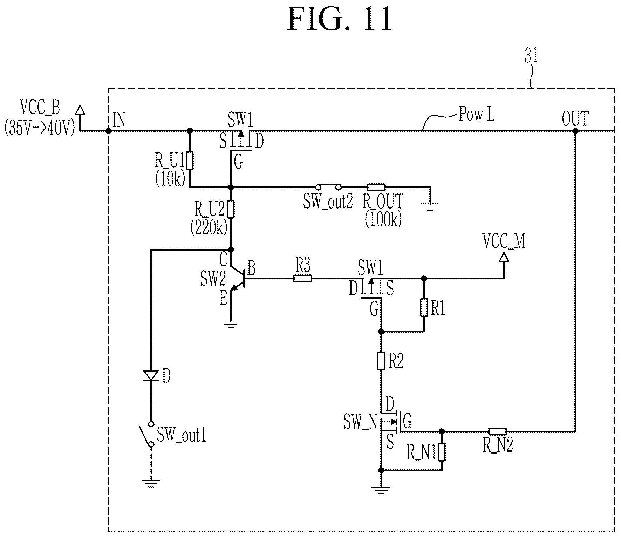

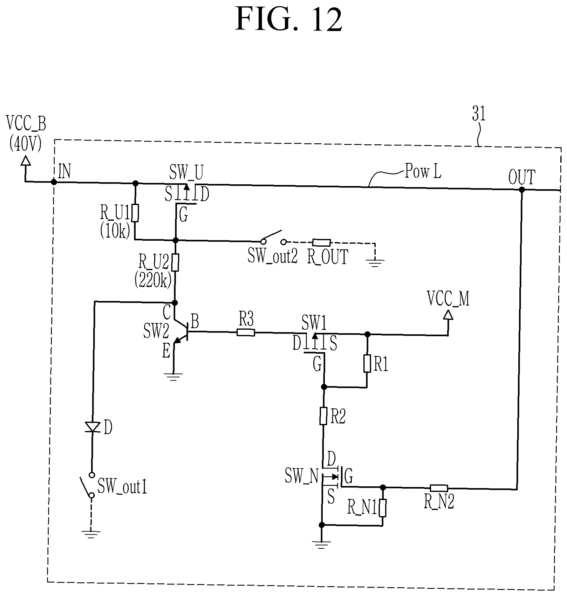

FIG. 11 is a circuit diagram showing a state where the control unit 37 waking up by the measure of FIG. 10 turns on the first storage transistor SW1; and FIG. 12 is a circuit diagram of the over-discharge prevention circuit 31 showing that the battery 10 and the converter 33 remain electrically connected to each other by the power maintenance circuit 313 even when the second external switch SW_out2 is turned off in the state of FIG. 11.

Referring to FIGS. 10 and 11, the control unit 37 may be turned on by receiving power from the converter 33 when the low-voltage transistor SW_U is turned on and the converter 33 and the battery 10 are electrically connected to each other. For example, the control unit 37 functioning as the auxiliary power source VCC_M may supply the voltage of zero V or more to the source S of the first storage transistor SW1. The control unit 37 may supply the high-level voltage to the base B of the second storage transistor SW2 through the first storage transistor SW1. The second storage transistor SW2 may then be turned on, and the second reference resistor R_U2 and the ground GND may be electrically connected to each other by the second storage transistor SW2. That is, the power maintenance unit 313 may be turned on by the control unit 37.

Referring to FIG. 11, the control unit 37 may control the relay 20 to thus electrically connect the battery 10 in the low voltage state and the external device to each other, thereby charging the battery 10 with power of the external device. The battery voltage VCC_B may then be increased from the reference voltage or less to (e.g., 35 V) to the reference voltage or more (e.g., 40 V).

Referring to FIGS. 11 and 12, the electrical connection between the battery 10 and the converter 33 may be maintained even if the second external switch SW_out2 is turned off when the battery voltage VCC_B is increased to the reference voltage or more, and the power storage unit 313 is its on state.

In detail, the second reference resistor R_U2 and the ground GND may be connected to each other when the second storage transistor SW2 is turned on. The second reference resistor R_U2 may then remain connected to the ground even when the second external switch SW_out2 is turned off, and the ground-level gate voltage V_G may be continuously supplied to the gate G of the low-voltage transistor SW_U.

Referring to FIGS. 6 and 12, the electrical connection between the battery 10 and the converter 33 may be maintained even if the first external switch SW_out1 or the second external switch SW_out2 is turned off when the battery voltage VCC_B is the reference voltage or more, and the power storage unit 313 is its on state.

Although the embodiments of the present disclosure have been described in detail hereinabove, the scope of the present disclosure is not limited thereto. Various modifications and improvements made by those skilled in the art to which the present disclosure pertains also belong to the scope of the present disclosure.

**Claims**

1. An over-discharge prevention circuit controlling electrical connection between a battery and a converter converting a battery voltage, which is a voltage across the battery, to a drive voltage of a predetermined magnitude and supplying the converted voltage to a control unit, the circuit comprising

   a low-voltage prevention unit including:

   (a) a low-voltage transistor connected between the battery and the converter to be turned on in a normal mode in which the battery voltage is more than a predetermined reference voltage, and turned off in an event mode in which the battery voltage is the reference voltage or less;
   (b) a first reference resistor connected between a positive electrode of the battery and a gate of the low-voltage transistor; and
   (c) a second reference resistor connected between the gate of the low-voltage transistor and ground,

   wherein each resistance value of the first reference resistor and the second reference resistor is determined based on a magnitude of the reference voltage.

2. The circuit of claim 1, wherein

   the low-voltage transistor is
   a P-channel metal-oxide-semiconductor field effect transistor (MOSFET), and has a source connected to the positive electrode of the battery and one end of the first reference resistor, the gate connected to the other end of the first reference resistor and one end of the second reference resistor, and a drain connected to the converter.

3. The circuit of claim 2, further comprising a power storage unit including:

   a first storage transistor turned on and operated with power from the control unit turned on by receiving the drive voltage; and
   a second storage transistor receiving power from the control unit and turned on to connect the second reference resistor and the ground to each other when the first storage transistor is turned on.

4. The circuit of claim 3, wherein

   the first storage transistor is
   the P-channel MOSFET, and has a source connected to the control unit and one end of the first storage resistor, a gate connected to the other end of the first storage resistor and one end of the second storage resistor, and a drain connected to one end of a third storage resistor.

5. The circuit of claim 4, wherein

the second storage transistor is
a negative-positive-negative (NPN) type bipolar junction transistor (BJT), and has a base connected to the other end of the third storage resistor, a collector connected to the other end of the second reference resistor, and an emitter connected to the ground.

6. The circuit of claim 5, further comprising

a first external switch connected between the collector of the second storage transistor and the ground, wherein in the normal mode, the low-voltage transistor is controlled to be turned on by being triggered by turn-on switching of the first external switch.

7. The circuit of claim 5, further comprising

a second external switch and an external resistor connected in series with each other between the gate of the low-voltage transistor and the ground, wherein in the event mode, the low-voltage transistor is controlled to be turned on by being triggered by turn-on switching of the second external switch.

8. The circuit of claim 7, wherein

a resistance value of the external resistor is
determined based on the magnitude of the reference voltage.

9. The circuit of claim 5, further comprising
a disturbance removal unit including:

a disturbance transistor connected between the second storage resistor and the ground;
a first disturbance resistor connected between a gate of the disturbance transistor and the ground; and
a second disturbance resistor connected between the drain of the low-voltage transistor and the gate of the disturbance transistor.

10. The circuit of claim 9, wherein

the disturbance transistor is
an N-channel MOSFET, and has a source connected to the ground, the gate connected to one end of the first disturbance resistor and the other end of the second disturbance resistor, and a drain connected to the other end of the second storage resistor.

# FIG. 1

# FIG. 2

EP 4 601 147 A1

# FIG. 3

# FIG. 4

# FIG. 5

# FIG. 6

# FIG. 7

# FIG. 8

# FIG. 9

# FIG. 10

# FIG. 11

EP 4 601 147 A1

# FIG. 12

## INTERNATIONAL SEARCH REPORT

| International application No. |
| --- |
| **PCT/KR2023/020676** |

---

**A. CLASSIFICATION OF SUBJECT MATTER**

**H02J 7/00**(2006.01)i; **G01R 19/165**(2006.01)i

According to International Patent Classification (IPC) or to both national classification and IPC

**B. FIELDS SEARCHED**

Minimum documentation searched (classification system followed by classification symbols)

H02J 7/00(2006.01); A47L 9/28(2006.01); H01M 10/42(2006.01); H01M 10/44(2006.01); H02J 7/02(2006.01); H02J 7/04(2006.01); H02J 7/10(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 배터리(battery), 과방전(overdischarge), 트랜지스터(transistor), 저항(resistor), 전압(voltage)

**C. DOCUMENTS CONSIDERED TO BE RELEVANT**

| Category* | Citation of document, with indication, where appropriate, of the relevant passages | Relevant to claim No. |
| --- | --- | --- |
| X | KR 10-2018-0106320 A (LG ELECTRONICS INC.) 01 October 2018 (2018-10-01)<br>See paragraphs [0065]-[0137]; claims 1-4 and 8; and figures 1-5. | 1-10 |
| A | KR 20-1999-0040744 U (LG ELECTRONICS INC.) 06 December 1999 (1999-12-06)<br>See paragraphs [0006]-[0011]; claims 1-2; and figures 2-3. | 1-10 |
| A | KR 10-0184506 B1 (SAMSUNG ELECTRONICS CO., LTD.) 15 May 1999 (1999-05-15)<br>See paragraphs [0013]-[0023]; claim 1; and figures 2-3. | 1-10 |
| A | JP 2020-198695 A (MITSUMI ELECTRIC CO., LTD.) 10 December 2020 (2020-12-10)<br>See paragraphs [0021]-[0080]; claims 1-10; and figures 2-10. | 1-10 |
| A | JP 2015-106981 A (MAKITA CORPORATION) 08 June 2015 (2015-06-08)<br>See paragraphs [0038]-[0116]; claims 1-7; and figures 1-11. | 1-10 |

☐ Further documents are listed in the continuation of Box C.    ☑ See patent family annex.

| | |
| --- | --- |
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **19 March 2024** | **19 March 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**EP 4 601 147 A1**

## INTERNATIONAL SEARCH REPORT
### Information on patent family members

International application No.

**PCT/KR2023/020676**

| Patent document cited in search report | | | Publication date (day/month/year) | Patent family member(s) | | | Publication date (day/month/year) |
|---|---|---|---|---|---|---|---|
| KR | 10-2018-0106320 | A | 01 October 2018 | KR | 10-2375510 | B1 | 18 March 2022 |
| KR | 20-1999-0040744 | U | 06 December 1999 | None | | | |
| KR | 10-0184506 | B1 | 15 May 1999 | KR | 10-1997-0077883 | A | 12 December 1997 |
| JP | 2020-198695 | A | 10 December 2020 | CN | 112018732 | A | 01 December 2020 |
| | | | | CN | 112018732 | B | 12 August 2022 |
| | | | | JP | 6614388 | B1 | 04 December 2019 |
| | | | | KR | 10-2020-0137965 | A | 09 December 2020 |
| | | | | KR | 10-2285228 | B1 | 03 August 2021 |
| | | | | US | 11264792 | B2 | 01 March 2022 |
| | | | | US | 11646569 | B2 | 09 May 2023 |
| | | | | US | 2020-0381917 | A1 | 03 December 2020 |
| | | | | US | 2022-0140596 | A1 | 05 May 2022 |
| JP | 2015-106981 | A | 08 June 2015 | CN | 104682485 | A | 03 June 2015 |
| | | | | CN | 104682485 | B | 15 September 2017 |
| | | | | EP | 2879227 | A1 | 03 June 2015 |
| | | | | EP | 2879227 | B1 | 07 November 2018 |
| | | | | JP | 6205254 | B2 | 27 September 2017 |
| | | | | US | 2015-0153416 | A1 | 04 June 2015 |
| | | | | US | 9778321 | B2 | 03 October 2017 |

Form PCT/ISA/210 (patent family annex) (July 2022)

26

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220183567

- KR 1020230177695